# EUROPÄISCHE PATENTSCHRIFT

(11) **EP 2 146 262 B1**
(45) Veröffentlichungstag und Bekanntmachung des Hinweises auf die Patenterteilung: **06.09.2017**
(21) Anmeldenummer: 09164006.0
(22) Anmeldetag: 29.06.2009
(51) Int. Cl.: G05B 23/02

(54) **Verfahren zum Bestimmen fehlerhafter Komponenten in einem System**
Method for determining incorrect components in a system
Procédé de détermination de composants défectueux dans un système

(30) Priorität: 16.07.2008 DE 102008040461
(43) Veröffentlichungstag der Anmeldung: 20.01.2010
(73) Patentinhaber: Robert Bosch GmbH, 70442 Stuttgart (DE)
(72) Erfinder: Dang Duc, Nghia, 31134, Hildesheim (DE); Engel, Peter, 31139, Hildesheim (DE)

(56) Entgegenhaltungen:
- WO-A1-2008/012486
- WO-A2-2004/010646
- US-A1- 2006 235 707
- US-A1- 2007 088 982

## Beschreibung

Die vorliegende Erfindung betrifft ein Verfahren und eine Vorrichtung zum Bestimmen fehlerhafter Komponenten in einem System nach dem Oberbegriff des unabhängigen Anspruchs 1 bzw. 8, wie aus der WO 2004/010646 A2 bekannt, wie es zum Beispiel bei einer Fehlerdiagnose für ein Kraftfahrzeug durch eine Werkstatt notwendig ist. Die Erfindung betrifft auch ein Computerprogrammprodukt, welches ein entsprechendes Verfahren implementiert.

### Stand der Technik

In komplexen Systemen, die viele Komponenten oder Einrichtungen aufweisen, wie es beispielsweise bei modernen Kraftfahrzeugen der Fall ist, wird die Fehlersuche bei Betriebsstörungen, beispielsweise im Pannenfall oder bei regelmäßig vorzunehmenden Wartungen, in der Werkstatt in der Regel durch Diagnosesysteme durchgeführt. Dazu werden Sensordaten oder historische Informationen des Fahrbetriebs ausgelesen und ausgewertet. Liegt beispielsweise ein Defekt vor, wird dann auf Grundlage der ausgelesenen Daten die wahrscheinlichste Fehlerursache, zum Beispiel der Ausfall einer bestimmten Komponente oder Einrichtung im Fahrzeug ermittelt. Dabei werden zum Beispiel Score-Tabellen eingesetzt oder die ausgelesenen Fahrzeugdaten werden mit Defekt- oder Fehlerszenarien verglichen, die auf Grundlage von funktionalen Modellen des Fahrzeugs bzw. des Zusammenspiels seiner Komponenten beruhen. Weitere Diagnosemöglichkeiten, um die die jeweilige Betriebsstörung verursachenden Komponenten festzustellen, sind bekannt. Die verschiedenen eingesetzten Diagnoseverfahren liefern jedoch nicht immer die korrekte Bestimmung der defekten Einheit im Fahrzeug bzw. System. Es ist daher wünschenswert, ein möglichst zuverlässiges Bestimmungsverfahren zu schaffen, um die Ursachen von Betriebsstörungen in Systemen mit mehreren Teilen oder Komponenten zu bestimmen.

### Offenbarung der Erfindung

Daher ist ein Verfahren zum Bestimmen fehlerhafter Komponenten in einem mehrere zusammenwirkende Komponenten aufweisenden System vorgeschlagen. In Abhängigkeit von verschiedenen unabhängig voneinander durchgeführten Diagnosealgorithmen werden Listen von potenziell fehlerhaften Komponenten erstellt. Jeder potenziell fehlerhaften Komponente wird dabei ein Fehlerwert zugeordnet. Es werden für zumindest eine Auswahl von Komponenten des Systems für eine jeweilige potenziell fehlerhafte Komponente die Fehlerwerte zu einem Fehlerscorewert verknüpft.

Eine Vorrichtung zur Bestimmung von fehlerhaften Komponenten in einem System, welches mehrere zusammenwirkende Komponenten aufweist, hat mehrere Diagnoseeinrichtungen, die derart eingerichtet sind, dass unter Durchführung eines jeweiligen Diagnosealgorithmus eine Liste von potenziell fehlerhaften Komponenten erstellt wird. Dabei umfasst die Liste zu jeder potenziell fehlerhaften Komponente einen zugeordneten Fehlerwert. Die Vorrichtung weist ferner eine Auswerteeinrichtung auf, welche in Abhängigkeit von den Listen für zumindest eine Auswahl von Komponenten des Systems für eine jeweilige potenziell fehlerhafte Komponente die Fehlerwerte zu einem Fehlerscorewert verknüpft.

Zusammenwirkende Komponenten oder Einrichtungen bilden dabei ein System, wie beispielsweise Einrichtungen eines Kraftfahrzeugs, die zumindest teilweise das Fahrzeug ausbilden. Unter zusammenwirkenden Komponenten wird dabei verstanden, dass bei der Funktion oder dem Betrieb des Systems die Komponenten jedenfalls teilweise aufeinander abgestimmt sind und die jeweiligen Funktionen voneinander abhängig sein können. Beim Beispiel eines Kraftfahrzeugs hängt beispielsweise die Fahrzeugbeleuchtung als Komponente von dem Zustand der Fahrzeugbatterie als weitere Komponente ab. Unter Komponenten können auch Sensoren verstanden werden, die Messwerte für verschiedene Systemdaten bereitstellen, welche als Indikatoren für bestimmte Betriebszustände des Systems verwendet werden können.

Als Symptom für eine fehlerhafte Komponente in dem System oder eine fehlerhafte Funktion des Systems kann zum Beispiel eine Abweichung von vorgegebenen Systemdaten oder Sensordaten von Solldaten verwendet werden. Es ist zum Beispiel denkbar, dass die Abweichung des Kraftstofffüllstandes im Tank von einem Sollbereich als ein Symptom für ein Nichtfunktionieren des gesamten Fahrzeugs ermittelt werden kann. Um bei einer komplexen Fehlerdiagnose die ursächlichen Komponenten festzustellen, genügt die Betrachtung eines einzelnen entsprechenden Symptoms jedoch in der Regel nicht aus.

Daher sieht das Verfahren und die Vorrichtung zur Bestimmung fehlerhafter Komponenten die Durchführung unterschiedlicher Diagnosealgorithmen vor, welche prinzipiell als Teilergebnis jeder Komponente des Systems einen Fehlerwert zuweisen. Dieser Fehlerwert kann als Wahrscheinlichkeit für eine defekte Funktion der jeweiligen Komponente verstanden werden. Durch die durchgeführten Diagnosealgorithmen wird in einer Variante des Verfahrens jeweils eine geordnete Liste der potenziell defekten Komponenten in der Ordnung ihrer Wahrscheinlichkeit ursächlich für einen Defekt der Funktion und/oder einer Teilfunktion des Systems zu sein. Anschließend erfolgt vorzugsweise für jede Komponente des Systems eine Verknüpfung ihrer zugewiesenen Fehlerwerte aus den erstellten Listen. Zum Beispiel können die Fehlerwerte einer jeweiligen Komponente aufaddiert werden. Je nach Verwendung des Maß für die Wahrscheinlichkeit in Abhängigkeit von den jeweiligen Fehlerwerten ergibt sich dann eine Score-Tabelle, die beispielsweise diejenigen Komponenten an der höchsten Stelle listet, welche am wahrscheinlichsten für einen Defekt des Systems verantwortlich sind.

Bei noch einer Variante des Verfahrens, insbesondere für den Fall, dass ein Fahrzeug als System betrachtet wird, wird ein Auslesen von System- bzw. Fahrzeugdaten vorgenommen, die Sensordaten der Komponenten umfassen. Es können auch extern eingegebene Symptomdaten wie beispielsweise durch den Fahrer beschriebene Defekte oder Fehler des Fahrzeugs im Betrieb bei der Erstellung zumindest einer der Listen berücksichtigt werden. Ferner können von einem Steuergerät des Systems, beispielsweise einer Motorsteuerung, an einem entsprechenden Datenbus ausgegebene Fahrzeugdaten berücksichtigt werden.

Die Erfindung betrifft ferner ein Computerprogrammprodukt, welches die Durchführung eines entsprechenden Verfahrens auf einer programmgesteuerten Rechner- oder Steuereinrichtung veranlasst. Als programmgesteuerte Rechner- oder Steuereinrichtung kommt zum Beispiel ein PC oder ein Rechner zur Steuerung eines Fahrzeugdiagnosesystems in Werkstätten in Frage, auf dem entsprechende Software bzw. eine Computerprogrammprodukt installiert ist. Das Computerprogrammprodukt kann beispielsweise in der Art eines Datenträgers wie zum Beispiel USB-Stick, Floppy-Disk, CD-ROM, DVD implementiert werden oder auch auf einer Servereinrichtung als herunterladbare Programmdatei implementiert sein.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
- Fig. 1:: eine schematische Darstellung eines Systems mit mehreren Komponenten;
- Fig. 2:: ein Ablaufdiagramm für ein Ausführungsbeispiel eines Verfahrens zum Bestimmen fehlerhafter Komponenten;
- Fig. 3:: ein Beispiel für eine Score-Tabelle; und
- Fig. 4:: eine schematische Darstellung eines Ausführungsbeispiels eines Diagnosesystems zur Bestimmung fehlerhafter Komponenten.

### Ausführungsformen der Erfindung

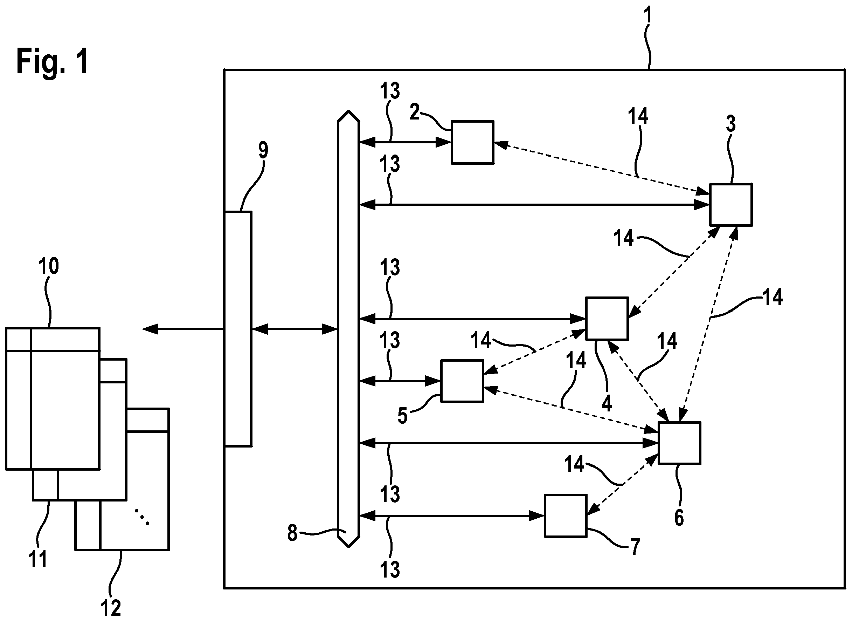

In der Figur 1 ist ein System mit mehreren Komponenten schematisch dargestellt. Das System, beispielsweise ein Kraftfahrzeug 1, ist dabei aus mehreren Einrichtungen 2, 3, 4, 5, 6, 7 aufgebaut, die miteinander zumindest teilweise in Wechselwirkung stehen können. Dies ist durch die Pfeile 14 angedeutet. Das System 1 kann ganz allgemeine Komponenten oder Einrichtungen 2 - 7 aufweisen, die lediglich als Beispiel in Zusammenhang mit Fahrzeugen als Komponenten wie ein Kühlmitteltemperaturfühler 2, eine Zündsteuerung 3, eine Benzin- oder Kraftstoffeinspritzsteuerung 4, eine Wegfahrsperre 5, eine Benzinpumpe 6 und ein Tankfüllsensor 7 betrachtet werden können.

Bei modernen Fahrzeugen bzw. Systemen sind die verschiedenen Komponenten 2 - 7 an einen internen Fahrzeugbus 8 gekoppelt, was durch die Pfeile 13 in der Figur 1 angedeutet ist. Eine Zusammenwirkung bzw. eine wechselseitige Abhängigkeit der Komponenten 2 - 7 untereinander besteht beispielsweise darin, dass bei nur ungenügender Tankfüllung, die durch den Sensor 7 festgestellt werden kann, eine Benzinpumpe 6 durch die Einspritzsteuerung 4 koordiniert, keinen Kraftstoff liefern kann. Insofern wird von der übergeordneten Motorsteuerung auch keine Zündung durch die Zündsteuerung 3 hervorgerufen, wenn das Fahrzeug 1 keinen Kraftstoff hat. Eine Wegfahrsperre 5 kann auch die Einspritzsteuerung 4 beeinflussen, wenn beispielsweise keine Authentifizierung durch den Halter des Fahrzeugs vorliegt.

Wenn nun das Fahrzeug eine Panne oder einen Fehler aufweist, ist es notwendig, die Komponente 2 - 7 festzustellen, welche den Fehler verursacht. Eine Diagnoseeinheit 9, welche an den internen Fahrzeugbus 8 gekoppelt ist, ermittelt beispielsweise bei geeigneter Programmierung und der Verwendung von mehreren Diagnosealgorithmen Listen von potenziell fehlerhaften Komponenten 10, 11, 12, welche in einer sich anschließenden Diagnose- oder Auswertestufe berücksichtigt werden. Die Listen 10, 11, 12 werden dann ausgewertet und anschließend alle die potenziell fehlerhaften Komponenten in der Reihenfolge ihrer Fehlerwahrscheinlichkeit als Score-Tabelle aufgelistet.

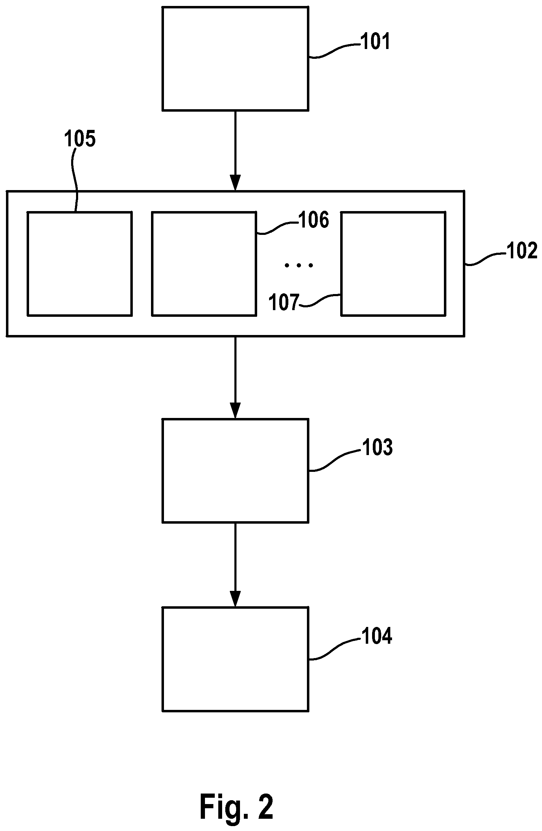

Ein Ablaufdiagramm eines entsprechenden Verfahrens zum Bestimmen der fehlerhaften Komponenten ist in der Figur 2 angegeben. In einem ersten Schritt 101 werden Systemdaten erfasst, beispielsweise die von den Komponenten 2 - 7 gelieferten Sensordaten oder Zustandsdaten der einzelnen Komponenten 2 - 7. Beispielsweise kann der Tankfüllsensor 7 den Tankfüllstand als Prozentzahl übermitteln. In einer weiteren Diagnosestufe 102 werden zum Beispiel parallel verschiedene Diagnosealgorithmen 105, 106, 107 durchgeführt. Auf mögliche Diagnosealgorithmen wird im Weiteren näher eingegangen.

Ein jeweiliger Diagnosealgorithmus liefert eine Liste von potenziell fehlerhaften Komponenten, die gemäß dem Diagnosealgorithmus voraussichtlich verantwortlich für das fehlerhafte Funktionieren des Systems bzw. Fahrzeugs sind. Dabei können zum Beispiel sogenannte Symptome verwendet werden, um festzustellen, ob eine Komponente voraussichtlich eine zuverlässige Funktion garantiert oder möglicherweise fehlerbehaftet ist. Eine Abweichung der Messgröße von einem Sollwert, beispielsweise eine Kühlmitteltemperatur, eine Abgastemperatur, eine Kühl- Schmier- oder weitere Betriebsmitteltemperatur, Drehzahlen, Drücke oder andere einen Betriebszustand des Systems oder Fahrzeugs charakterisierende Größen können als Symptome verwendet werden.

Auf der Grundlage mehrerer Diagnosealgorithmen liegen dann, zum Beispiel geordnete Listen von speziellen defekten oder fehlerhaften Komponenten vor, das heißt Listen, in denen die im System vorliegenden Komponenten in der Wahrscheinlichkeit ihres nichtoptimalen Funktionierens aufgeführt sind. Im Schritt 103 werden die einzelnen Listen ausgewertet und für jede vorliegende Komponente ein Scorewert bzw. ein Fehlerscorewert berechnet. Dies kann zum Beispiel derart erfolgen, dass die in den einzelnen Teillisten zugewiesenen Fehlerwerte auf die Komponenten für jede Komponente aufaddiert werden. Dabei kann auch eine Gewichtung der Fehlerwerte hinsichtlich der Zuverlässigkeit des eingesetzten Diagnosealgorithmus 105, 106, 107 vorgenommen werden.

Es ergibt sich im Schritt 104 als Ergebnis der Analyse der einzelnen Listen im Schritt 103 eine Score-Tabelle, die jeder Komponente des Systems einen Fehlerscorewert zugewiesen hat. Es wird dann beispielsweise diejenige Komponente als Fehlerursache oder Fehlerquelle betrachtet, die den höchsten Fehlerscorewert aufweist.

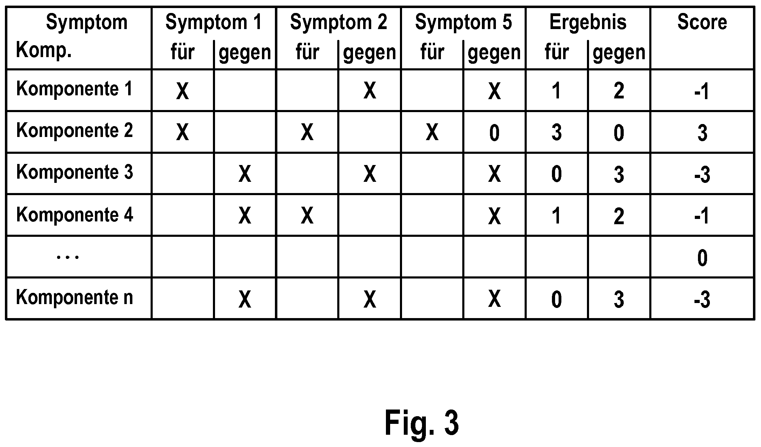

Zur Veranschaulichung ist eine Score-Tabelle in Figur 3 als solche beispielhaft dargestellt. Die erste Spalte listet die im System vorliegenden Komponenten 1 - n auf. Bei einem heuristischen Diagnosealgorithmus werden verschiedene Symptome für jede Komponente betrachtet, beispielsweise eine prozentuale Abweichung eines Sensor- oder Messwertes von einem Sollwert, und es wird entschieden, ob für jedes Symptom die ermittelten Komponentendaten für oder gegen das Vorliegen eines Fehlers sprechen. In der ersten Zeile der in der Figur 3 dargestellten Tabelle wurde das Vorliegen des Symptoms 1 markiert, Symptome 2 und 5 liegen bei der Komponente 1 jedoch nicht vor. In der fünften Spalte ergeben sich für die Komponente 1 somit ein Treffer für das Vorliegen eines Fehlers und zwei Treffer für das Nichtvorliegen eines Fehlers bzw. des Symptoms. Als Scorewert ergibt sich beispielsweise die Zahl -1. Eine ähnliche Symptomanalyse erfolgt für die Komponenten 2, 3, 4 bis n. Die sich ergebenden Scorewerte sind in der letzten Spalte der Figur 3 angegeben.

Anhand der Scorewerte kann nun eine Priorisierung der möglichen Lösungen des Diagnoseproblems vorgenommen werden. Bei den in der Figur 3 angegebenen Scorewerten steht die Komponente 2 an erster Stelle, die Komponenten 1 und 4 an zweiter Stelle und die Komponenten 2 und n an dritter Stelle. Bei Verwendung der Score-Tabelle in der Figur 3 ist es somit am Wahrscheinlichsten, dass die Komponente 2 einen Funktionsfehler aufweist.

Bei dem vorgeschlagenen Verfahren zum Bestimmen der jeweiligen fehlerhaften Komponente im System wird nicht eine einzelne Score-Tabelle verwendet. Vielmehr werden weitere Diagnosealgorithmen eingesetzt, die jeweils eine priorisierte Liste mit den potenziell fehlerhaften Komponenten liefern. Ein auf Score-Tabellen basierter Diagnosealgorithmus ist dabei lediglich eine Möglichkeit, die berücksichtigt werden kann. Als weitere Diagnosealgorithmen, die jeweils priorisierte Listen mit beispielsweise in der Wahrscheinlichkeit für das Auftreten eines Fehlers geordneten Komponenten sind eine Fehlerbaumanalyse, eine Auswahleffektanalyse, modellbasierte Diagnoseformen, Diagnosemöglichkeitsanalysen unter Verwendung von Symptom-Ursachen-Matrixen, heuristisches Wissen, das beispielsweise bei bestimmten Symptom- oder Komponentendatenkombinationen auf bestimmte Fehlerzustände des Systems schließen lassen.

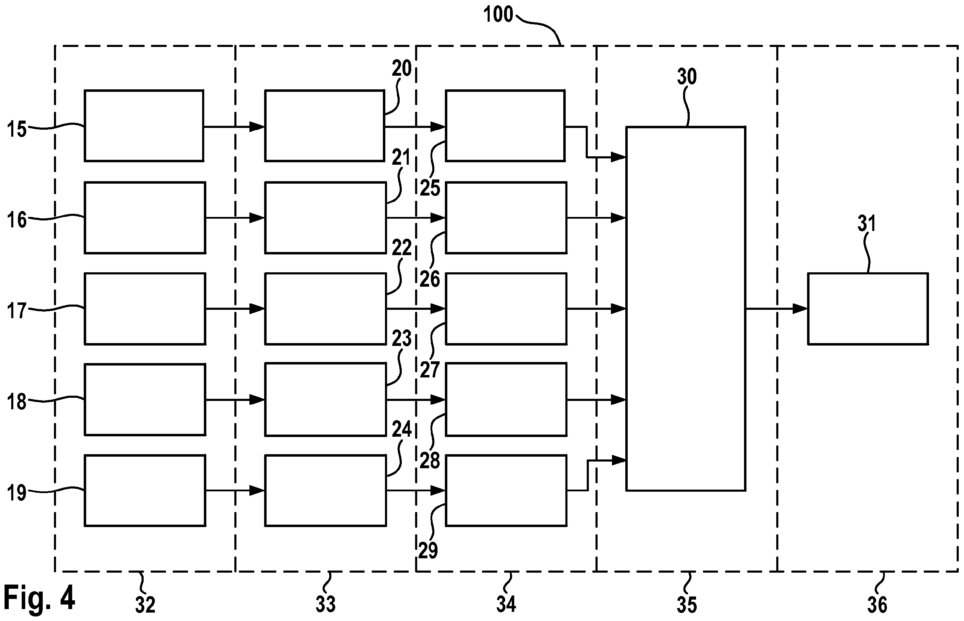

In der Figur 4 ist ein Ausführungsbeispiel für ein Diagnosesystem zur Bestimmung fehlerhafter Komponenten schematisch dargestellt. Das Diagnosesystem 100 ist mehrstufig aufgebaut. Dabei ist in einer ersten Stufe 32 Diagnosewissen für verschiedene Diagnosealgorithmen bereitgestellt. Dies können beispielsweise Fehlerbaumdaten eines Algorithmus, der heuristisches Wissen des Systems verwendet, sein. In der zweiten Stufe 33 ist die Durchführung verschiedener Diagnosealgorithmen vorgesehen. Die dritte Stufe 34 entspricht den durch die Diagnosealgorithmen gelieferten priorisierten Listen von potenziell fehlerhaften Komponenten, wie sie von den verschiedenen potenziell parallel ablaufenden Diagnosealgorithmen geliefert werden. Die vierte Stufe 35 sieht vor, die jeweiligen Listen aus der Vorstufe 34 in eine Score-Tabelle einzutragen. In der letzten Stufe 36 ergibt sich aus der Bewertung der Fehlerscorewerte in der Score-Tabelle aus der Vorstufe 35 die priorisierte Liste als Diagnosegesamtergebnis, welche die Komponenten mit der höchsten Fehlerwahrscheinlichkeit an erster Stelle listet. Anschließend können Reparaturmaßnahmen an den aufgeführten Komponenten vorgenommen werden.

Das Diagnosesystem 100 kann auch computerimplementiert durchgeführt werden, wobei die verschiedenen Stufen zum Beispiel Programmroutinen entsprechen können. Die Figur 4 zeigt beispielhaft fünf verschiedene Diagnosealgorithmen, welche zur Erstellung jeweils einer priorisierten Liste von potenziell fehlerbehafteten Komponenten verwendet werden können. Die Gesamtliste ist mit 31 bezeichnet. Bei einer modellbasierten Diagnose 20 wird ein Modell 15 des Systems, zum Beispiel des Kraftfahrzeugs mit seinen einzelnen Komponenten, bereitgestellt. Das meist computerimplementierte Modell 15 kann so mit den erfassten Sensor- oder Betriebszustandsdaten der einzelnen Komponenten den wahrscheinlichen Betriebszustand berechnen. Dies erfolgt in einer entsprechenden Berechnungseinheit 20, die den modellbasierten Diagnosealgorithmus implementiert. Das entsprechend verwendete funktionelle Modell des Systems kann zum Beispiel hierarchisch aufgebaut werden, wobei mehrere Teilsysteme im Wesentlichen getrennt voneinander modelliert werden. Beispielsweise kann das Bremssystem und das Motorsystem hierarchisch voneinander abhängig konstruiert werden. Alle Einzelteilmodelle bilden dann das funktionelle Modell des Fahrzeugs. Das modellbasierte Diagnoseverfahren 20 liefert dann eine priorisierte Liste 25 als Teilergebnis, wobei zum Beispiel als Fehlerwerte der Komponenten ihre Stellungen in der priorisierten Liste angegeben werden. Die notwendigen Daten für die Verwendung des Modells für das Fahrzeug können zum Beispiel einem Steuergerät entnommen werden. Es können auch physikalische Messgrößen durch Sensoren ermittelt werden, wie zum Beispiel Spannung, Druck, Abgastemperatur oder weiteres. Ferner können auch subjektive Beobachtungen zum Beispiel eines Werkstattpersonals dem Modell übergeben werden. Insbesondere kommen dabei Geräusche oder Ergebnisse einer Sichtkontrolle in Frage. Durch einen Vergleich des tatsächlichen Verhaltens des Fahrzeugs bzw. der gemessenen Sensorwerte oder erfassten Betriebszustandsdaten des Fahrzeuges mit dem durch das Modell ermittelten Verhalten können besonders verdächtigen Komponenten hoher Fehlerwerte zugeordnet werden. Es ist auch eine Kombination mit einer Fehlerbaumanalyse möglich.

Als weiterer möglicher Diagnosealgorithmus kommt die Fehlermöglichkeits- und Einflussanalyse (FMEA = failure mode and effects analysis) in Frage. Die FMEA wird meist bei der Design- und Entwicklungsphase der Produkte, also des Fahrzeugs angewandt und ist insbesondere bei Zulieferern für Automobilhersteller verbreitet. In der Entwurfsphase werden daher frühzeitige Identifikationen potenzieller Fehlerursachen abgespeichert. Die FMEA gilt als analytische Methode der Zuverlässigkeitstechnik, um potenzielle Schwachstellen in Systemen zu finden. Bei der entsprechenden Diagnose wird das System, also das Fahrzeug, in seine Elemente bzw. Komponenten zerlegt. Jedem Element oder jeder Komponente wird ein Eintrittsrisiko für einen Defekt zugeordnet. In Abhängigkeit von diesen Eintrittsrisiken für Fehler oder Defekte kann die Ausfallwahrscheinlichkeit der jeweiligen Komponente bestimmt werden. Dies erfolgt durch einen entsprechenden Algorithmus, der mit 21 bezeichnet ist. Als Ergebnis erhält man wiederum eine priorisierte Liste 26 als Teilergebnis mit Komponenten, die fehlerhaft sein können.

Der Kasten 17 und 22 entspricht einer Diagnosemöglichkeitsanalyse (DMA) als Diagnosealgorithmus. Dabei werden Symptom-Ursachen-Matrizen und Methoden-Ursachen-Matrizen verwendet. Man geht von einem Wissen über Symptome und deren Ursache aus, was insbesondere während der Entwicklungsphase der einzelnen Komponenten und Teilsystemen möglich ist. Bestimmte Rückmeldungen in Form von Komponentendaten werden dabei in Fehlersituationen berücksichtigt. Auch die DMA liefert eine priorisierte Liste 27 von Komponenten, die potenziell Fehler aufweisen.

Schließlich kann eine Falldatenbank 18 verwendet werden, in der bestimmte Fehlerkonfigurationen erkannt werden, also Kombinationen von Betriebszustandsdatenwerten der Komponenten, die jeweils einem vorgegebenen Fehlerzustand entsprechen. Eine entsprechende Falldatenbank 18 ist insofern eine gespeicherte Sammlung von Fällen mit Problem- bzw. Fehlerbehebungslösungen und einer detaillierten Protokollierung der Symptome. Ein entsprechender Diagnosealgorithmus 23 sucht den bei der vorliegenden System- oder Komponentendatenkombination am ähnlichsten Fall aus der Datenbank 18 und ermittelt daraus eine Liste mit den vermutlich fehlerhaften Komponenten 28.

Schließlich wird ein, wie beispielsweise in der Figur 3 dargestellter, Diagnosealgorithmus 24 mit Score-Tabellen 19 verwendet, um eine priorisierte Liste 29 zu erstellen. Diese Liste kann beispielsweise die Zuordnung des Scorewertes aus der letzten Spalte der Tabelle in Figur 3 auf die Komponenten in der ersten Spalte sein.

Es liegen somit in der dritten Stufe 34 des Diagnosesystems 100 mehrere priorisierte Listen 25 - 29 mit potenziell fehlerhaften Komponenten des Systems vor. Die priorisierte Liste 25 kann beispielsweise eine Abfolge der in der Figur 1 dargestellten Komponenten entsprechend ihrer Fehlerwahrscheinlichkeit basierend auf die Auswertealgorithmen 20 - 24 aufweisen. Daraus wird eine Gesamt-Score-Tabelle 30 ermittelt, wobei die jeweiligen den Komponenten zugeordneten Fehlerwerte für jede Komponente beispielsweise addiert werden. Es ist dabei auch möglich, dass in Abhängigkeit von der Zuverlässigkeit der verwendeten Analysealgorithmen 20 - 24 eine Gewichtung der Fehlerwerte vorgenommen wird.

Jeder Komponente des Systems ist somit ein Fehlerscorewert zugeordnet, wobei der Fehlerscorewert in Abhängigkeit von den verschiedenen priorisierten Listen 25 - 29 erzeugt wurde. Ist beispielsweise in jeder der priorisierten Listen 25 - 29 die Wegfahrsperre 5 an erster Stelle wird auch in der Gesamt-Score-Tabelle 30 diese Komponente 5 den höchsten Scorewert erhalten. Das heißt, sie wird als wahrscheinlichste Fehlerursache angesehen. Aus den berechneten Fehlerscorewerten für die einzelnen Komponenten wird in der letzten Algorithmusstufe 36 eine priorisierte Liste 31 als Gesamtergebnis erzeugt. Bei dem zuvor betrachteten Fall steht die Wegfahrsperre 5 dann an erster Stelle, so dass das Werkstattpersonal zunächst diese Komponente detailliert prüfen kann.

Die Durchführung des Verfahrens bzw. der angesprochenen Verfahrensschritte lässt sich durch die in der Figur 4 dargestellten funktionellen Blöcke 15 - 31 auch als als Einrichtungen implementieren. Dabei ist dem Fachmann klar, welche Verfahrenssteile der oben beschriebenen Auswertevorgänge jeweils implementiert sind. Zum Beispiel kann der Block 16 eine Speichereinrichtung mit FMEA-Daten sein. Demgemäß sind die Einrichtungen derart ausgestaltet das jeweilige Verfahrensschritte umgesetzt und durchgeführt werden. Insofern können die funktionalen Blöcke 15 - 31 der Figur 4 auch als Programmmodule oder Routinen aufgefasst werden, welche zur Implementierung der jeweiligen Funktion dienen.

Die Erfindung ist nicht auf die Fehlerdiagnose in Fahrzeugen beschränkt. Auch andere komplexe System, die zusammenwirkende Komponenten aufweisen, können gemäß den vorbeschriebenen Aspekten der Auswerte- und Diagnoseverfahren untersucht werden.

## Patentansprüche

1. Verfahren zum Bestimmen fehlerhafter Komponenten in einem mehrere zusammenwirkende Komponenten (2 - 7) aufweisenden System (1),
**dadurch gekennzeichnet,**
**dass** in Abhängigkeit von verschiedenen unabhängig voneinander durchgeführten Diagnosealgorithmen (20 - 24) Listen (10, 11, 12) von potenziell fehlerhaften Komponenten erstellt werden und jeder potenziell fehlerhaften Komponente ein Fehlerwert zugeordnet wird, wobei für zumindest eine Auswahl von Komponenten (2 - 7) des Systems (1) für eine jeweilige potenziell fehlerhafte Komponente die Fehlerwerte zu einem Fehlerscorewert verknüpft werden.

2. Verfahren nach Anspruch 1, wobei als Symptom für eine fehlerhafte Komponente oder eine fehlerhafte Funktion des Systems (1) eine Abweichung von vorgegebenen Systemdaten oder Sensordaten von Solldaten verwendet werden.

3. Verfahren nach Anspruch 1 oder 2, wobei ein jeweiliger Diagnosealgorithmus (20 - 24) die potenziell fehlerhaften Komponenten in Abhängigkeit von einem Fehlerbaum für das System (1), in Abhängigkeit von einer Ausfalleffektanalyse (FMEA), in Abhängigkeit von einer Score-Tabelle, welche für jede Komponente (2 - 7) einen Fehlerwert als Summe von Teilfehlerwerten liefert, in Abhängigkeit von einem funktionalen Modell des Systems (1), in Abhängigkeit von einer Symptom-Ursachen-Matrix und/oder in Abhängigkeit von einer Fehlerfalldatenbank ermittelt.

4. Verfahren nach einem der Ansprüche 1 - 3, wobei ein jeweiliger Fehlerwert einer Wahrscheinlichkeit für eine defekte Funktion der jeweiligen Komponente (2 - 7) entspricht.

5. Verfahren nach einem der Ansprüche 1 - 4, wobei der jeweilige Fehlerscorewert durch Addieren der Fehlerwerte einer jeweiligen Komponente (2 - 7) bestimmt wird.

6. Verfahren nach einem der Ansprüche 1 - 5, wobei die Komponenten (2 - 7) Einrichtungen eines Fahrzeugs, insbesondere eines Kraftfahrzeugs, sind.

7. Verfahren nach einem der Ansprüche 1 - 6, wobei Systemdaten ausgelesen werden, welche Sensordaten der Komponenten umfassen, extern eingegebenen Symptomdaten und/oder von einem Steuergerät des Systems (1) ausgegebene Daten, bei der Erstellung der Listen (10, 11, 12) berücksichtigt werden.

8. Vorrichtung (100) zur Bestimmung von fehlerhaften Komponenten in einem System (1), welches mehrere zusammenwirkende Komponenten (2 - 7) aufweist,
**dadurch gekennzeichnet,**
**dass** mehrere Diagnoseeinrichtungen (20 - 24) vorgesehen sind, welche derart eingerichtet sind, dass unter Durchführung eines jeweiligen Diagnosealgorithmus eine Liste (25 - 29) von potenziell fehlerhaften Komponenten erstellt wird, wobei die Liste (25 - 29) zu jeder potenziell fehlerhaften Komponente einen zugeordneten Fehlerwert umfasst, und dass eine Auswerteeinrichtung (30) vorgesehen ist, welche in Abhängigkeit von den Listen (25 - 29) für zumindest eine Auswahl von Komponenten des Systems (1) für eine jeweilige potenziell fehlerhafte Komponente die Fehlerwerte zu einem Fehlerscorewert (31) verknüpft.

9. Vorrichtung (100) nach Anspruch 8, wobei die Vorrichtung (100) derart eingerichtet ist, dass ein Verfahren nach einem der Ansprüche 1 - 8 durchgeführt wird.

10. Computerprogrammprodukt, welches die Durchführung eines Verfahrens nach einem der Ansprüche 1 - 8 auf einer programmgesteuerten Rechner- oder Steuereinrichtung veranlasst.

## Claims

1. Method for determining faulty components in a system (1) comprising a plurality of interacting components (2-7),
**characterized**
**in that** lists (10, 11, 12) of potentially faulty components are created depending on different diagnostic algorithms (20-24) that are carried out independently of one another and an error value is assigned to each potentially faulty component, wherein, for a respective potentially faulty component, the error values are linked to form an error score value for at least a selection of components (2-7) of the system (1).

2. Method according to Claim 1, wherein a deviation of predetermined system data or sensor data from intended data is used as a symptom for a faulty component or an incorrect function of the system (1).

3. Method according to Claim 1 or 2, wherein a respective diagnostic algorithm (20-24) ascertains the potentially faulty components depending on a fault tree for the system (1), depending on a failure effect analysis (FMEA), depending on a score table which provides an error value as a sum of partial error values for each component (2-7), depending on a functional model of the system (1), depending on a symptom-cause matrix and/or depending on a fault database.

4. Method according to any one of Claims 1-3, wherein a respective error value corresponds to a probability of defective function of the respective component (2-7).

5. Method according to any one of Claims 1-4, wherein the respective error score value is determined by adding the error values of a respective component (2-7).

6. Method according to any one of Claims 1-5, wherein the components (2-7) are devices of a vehicle, in particular of a motor vehicle.

7. Method according to any one of Claims 1-6, wherein system data are read, which comprise sensor data from the components, externally entered symptom data and/or data output by a controller of the system (1), are taken into account when creating the lists (10, 11, 12).

8. Apparatus (100) for determining faulty components in a system (1) comprising a plurality of interacting components (2-7),
**characterized**
**in that** a plurality of diagnostic devices (20-24) are provided, said diagnostic devices being configured in such a way that, when carrying out a respective diagnostic algorithm, a list (25-29) of potentially faulty components is created, wherein the list (25-29) comprises an assigned error value for each potentially faulty component, and in that an evaluation device (30) is provided, said evaluation device linking the error values to form an error score value (31) for a respective potentially faulty component depending on the lists (85-29) for at least a selection of components of the system (1).

9. Apparatus (100) according to Claim 8, wherein the apparatus (100) is configured in such a way that a method according to any one of Claims 1-8 is carried out.

10. Computer program product which causes a method according to any one of Claims 1-8 to be carried out in a program-controlled computing or control device.

## Revendications

1. Procédé de détermination des composants défectueux dans un système (1) qui possède plusieurs composants (2 - 7) en interaction,
**caractérisé en ce**
**que** des listes (10, 11, 12) de composants potentiellement défectueux sont établies en fonction de différents algorithmes de diagnostic (20 - 24) exécutés indépendamment les uns des autres et une valeur de défaut est associée à chaque composant potentiellement défectueux, les valeurs de défaut étant combinées en une valeur de note de défaut pour un composant potentiellement défectueux respectif pour au moins une sélection de composants (2 - 7) du système (1).

2. Procédé selon la revendication 1, un écart par rapport à des données de système ou des données de capteur prédéfinies par rapport à des données de consigne étant utilisé comme symptôme pour un composant défectueux ou un fonctionnement erroné du système (1).

3. Procédé selon la revendication 1 ou 2, un algorithme de diagnostic (20 - 24) respectif déterminant les composants potentiellement défectueux en fonction d'une arborescence des défauts pour le système (1), en fonction d'une analyse des modes de défaillance et de leurs effets (FMEA), en fonction d'une table de notation qui fournit, pour chaque composant (2 - 7), une valeur de défaut sous la forme d'une somme de valeurs de défaut partielles, en fonction d'un modèle fonctionnel du système (1), en fonction d'une matrice des symptômes/causes et/ou en fonction d'une base de données des cas de défaut.

4. Procédé selon l'une des revendications 1 à 3, une valeur de défaut respective correspondant à une probabilité pour un fonctionnement défaillant du composant (2 - 7) correspondant.

5. Procédé selon l'une des revendications 1 à 4, la valeur de note de défaut respective étant déterminée en additionnant les valeurs de défaut d'un composant (2 - 7) correspondant.

6. Procédé selon l'une des revendications 1 à 5, les composants (2 - 7) étant des équipements d'un véhicule, notamment d'un véhicule automobile.

7. Procédé selon l'une des revendications 1 à 6, des données de système étant lues, lesquelles comprennent des données de capteur des composants, des données de symptôme entrées depuis l'extérieur et/ou des données délivrées par un contrôleur du système (1), sont prises en compte lors de la création des listes (10, 11, 12).

8. Dispositif (100) de détermination de composants défectueux dans un système (1) qui possède plusieurs composants (2 - 7) en interaction,
**caractérisé en ce**
**qu'**il existe plusieurs appareils de diagnostic (20 - 24) qui sont conçus de telle sorte qu'une liste (25 - 29) de composants potentiellement défectueux est établie en exécutant un algorithme de diagnostic correspondant, la liste (25 - 29) comprenant une valeur de défaut associée à chaque composant potentiellement défectueux, et **en ce qu'**il existe un appareil d'interprétation (30) qui combine les valeurs de défaut en une valeur de note de défaut (31) pour un composant potentiellement défectueux respectif en fonction des listes (25 - 29) pour au moins une sélection de composants du système (1).

9. Dispositif (100) selon la revendication 8, le dispositif (100) étant conçu de telle sorte qu'un procédé selon l'une des revendications 1 à 8 est mis en oeuvre.

10. Produit de programme informatique qui provoque la mise en oeuvre d'un procédé selon l'une des revendications 1 à 8 sur un appareil de calcul ou de commande programmable.
